# EUROPEAN PATENT SPECIFICATION

(11) **EP 0 396 778 B1**
(45) Date of publication and mention of the grant of the patent: **25.02.1998**
(21) Application number: 89912498.6
(22) Date of filing: 09.11.1989
(51) Int. Cl.: G06K 11/18, G06K 11/06, G06F 3/16, G06K 9/24

(54) **INFORMATION INPUT METHOD AND APPARATUS**
INFORMATIONSEINGABEVERFAHREN UND VORRICHTUNG
PROCEDE ET DISPOSITIF D'INTRODUCTION D'INFORMATIONS

(30) Priority: 11.11.1988 JP 284018/88; 19.05.1989 JP 124489/89
(43) Date of publication of application: 14.11.1990
(73) Proprietor: NKK CORPORATION, Tokyo 100 (JP)
(72) Inventor: KONDO, Mamoru, Tokyo 194-01 (JP)
(74) Representative: Watkins, David
(86) International application number: JP8901148
(87) International publication number: WO9005332

(56) References cited:
- EP-A- 0 130 649
- JP-A- 5 057 333
- JP-A-61 240 361
- JP-U- 6 228 252
- IBM TECHNICAL DISCLOSURE BULLETIN. vol. 19, no. 6, November 1976, NEW YORK, US,
- pages 2187-2191, K.H. BORCHARDT ET AL.: "Manuel character entry device"
- IBM TECHNICAL DISCLOSURE BULLETIN. vol. 23, no. 8, January 1981, NEW YORK USpages 3831 - 3834; J.E. FOX: 'Keyboard scanned capacitive joy stick cursor control '
- PATENT ABSTRACTS OF JAPAN vol. 11, no. 87 (P-557)March 17, 1987& JP-A-61 240 361 (HITACHI ELECTRONICS ENG. CO. LTD ) October 25, 1986

## Description

### TECHNICAL FIELD

The present invention relates to an information input method for entering numerals, alphabets, Hiragana, Katakana, Kanji, and command symbols for processing information, etc., (hereinafter referred to as characters and symbols) into a word processor or typewriter and apparatus which uses the method.

### BACKGROUND ART

The usual means of entering characters and symbols into a word processor has been a keyboard or key switches.

Such a keyboard is comprised of a number of keys arranged in a certain order, corresponding respectively to fifty or more different kinds of characters and symbols.

Key switches comprise a number of switches arranged in rows and/or columns with certain spacings.

One disadvantage of a keyboard is that the number of keys is large and the arrangement of keys is complicated. Considerable skill is required for touch typing, that is, typing the keys without looking at one's fingers while looking at a manuscript.

The keyboard has another disadvantage. The size is large and inconvenient to carry in the pocket, because it must be of a certain size to type on it using ten fingers.

When key switches are used, touch typing is impossible, and the size becomes larger in order to enter a large variety of characters and symbols.

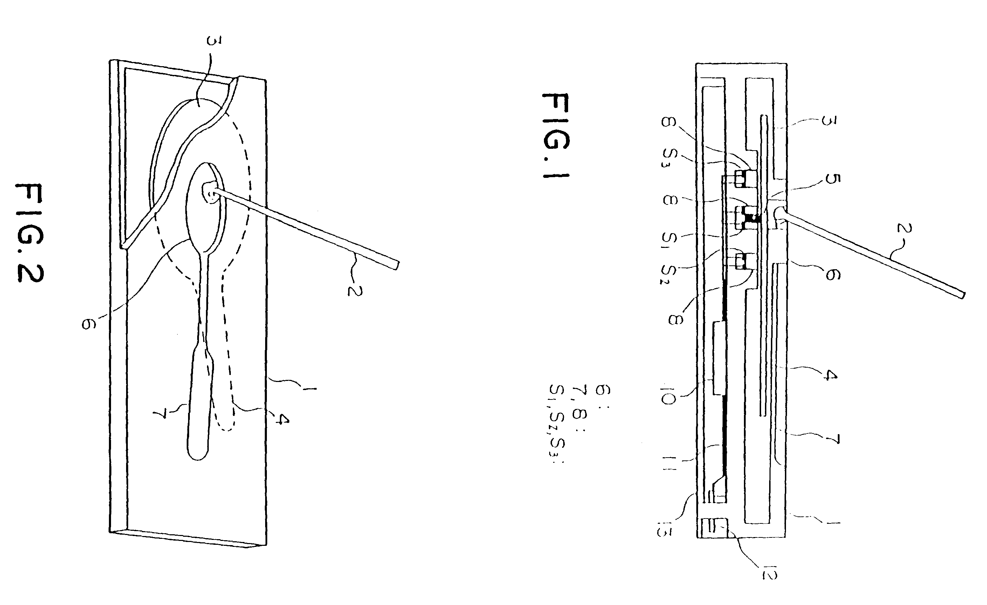

As an information input apparatus having a smaller number of switches than a key switch arrangement and a smaller size than a keyboard, a manual character entry device has been proposed, which is shown in Figure 1 of IBM TECHNICAL DISCLOSURE BULLETIN, VOL. 19, No.6, p2187 (Nov 1976). In this apparatus, 16 sensors (0, 1, ...9, A, B, ...F) are arranged on a surface. When a person scribes a character on the plane using a stylus between the guides which are shown shaded in the Figure, the combination of sensors which is touched by the stylus is indicative of a unique character. A list of sensor sequences and their corresponding character codes is stored in a memory apparatus beforehand. When a character is written on the device, the sequence is sensed and the corresponding character code is input. Using six such sensor pads in a row, it is possible to enter a word with six letters or less by an operation like manual writing.

Though this apparatus is small in size with a small number of sensors and inexpensive, it cannot enter characters at a high speed.

### DISCLOSURE OF THE INVENTION

The present invention has been made to provide an information input method and apparatus which make it possible to enter characters and symbols by moving a single movable element relative to a substantially plane or curved detection surface.

It is to be noted that the movable element can be arranged to move either in planar fashion, or in a curved path, and in the text which follows the term "surface" is used to denote either of these possibilities.

According to a first aspect of the invention, there is provided an information input method comprising the steps of:
moving a movable element on a plane surface or a curved surface;
characterized by determining a path of movement of said movable element relative to said surface by detecting its passage past a plurality of fixed detection positions provided on said surface, whereby said path of movement of said movable element defines an activation sequence of detected positions;
the character, symbol or processing instruction (hereinafter, symbol) to be input being determined without recourse to a discrete "enter" command, by:
   (a) correlating the detected activation sequence against a plurality of predetermined sequences of detection positions, each of which predetermined sequences corresponds to a particular character, symbol or processing instruction (hereinafter, a symbol);
   (b) assigning to said detected activation sequence the respective symbol having the same value as the symbol assigned to the corresponding predetermined sequence, and
   (c) inputting the symbol corresponding to said activation sequence.

According to a second aspect of the invention, there is provided an information input apparatus comprising:
a movable element adapted to be movable on a plane surface or a curved surface said movable element comprising an operating handle,
movable element detecting means arranged at a plurality of predetermined positions on said surface for detecting the passage of said movable element;
characterized by character/symbol/instruction discriminating means for determining a character, symbol or instruction corresponding to a passage of said movable element in relation to an activation sequence of said detecting means;
character/symbol/instruction input means for inputting selected character/symbol/instruction signals from said character/symbol/instruction discriminating means;
said movable element comprising an a first plane guide member having said operating handle attached to an upper surface thereof and being movable on said surface, and a detection member attached to a lower surface of said plane guide member and adapted to be detected by said movable element detecting means;
said character/symbol/instruction discriminating means comprising:
   (a) means for correlating the detected activation sequence against a plurality of predetermined sequences of detection positions, each of which predetermined sequences corresponds to a particular character, symbol or processing instruction (hereinafter, a symbol);
   (b) means for assigning to said detected activation sequence the respective symbol having the same value as the symbol assigned to the corresponding predetermined sequence, and
   (c) means for inputting the symbol corresponding to said activation sequence.

Further, the information input apparatus according to the present invention may be provided with a voice generating means whereby the character, symbol or the like generated from the character/symbol output means is converted to a voice and outputted.

It is to be noted that the movable element can be moved on either of the plane surface and curved surface and therefore the term surface includes the curved surface in the description to be followed.

With the above-mentioned information input method and apparatus, when the movable element is moved to pass through at least one of the detection positions the movable element detecting means detects the passage of the movable element and the character/symbol output means detects the moving path of the movable element in accordance with the detection output of the movable element detecting means, thereby causing the character/symbol discriminating means to input the character, symbol or the like corresponding to the detected moving path of the movable element.

Such information input method and apparatus have the following features.

Firstly, by simply moving the single movable element like a pen, it is possible to enter the character, symbol or the like corresponding to the moving path of the movable element.

Secondly, movable element guide members are arranged on the substantially plane surface so that the movable element is moved on the surfaces of the movable element guide members, and therefore the movable element does not fall apart from the movable element guide members, thereby entering the characters, symbols, etc., easily.

Thirdly, the moving paths of the movable element are defined by the movable element guide members thus making easy the selection and discrimination of the moving paths by the movable element and also the defining of the moving paths is imparted as the sense of touch to the person who performs the entering operation thereby making the selection of the moving paths easy and increasing the operating speed..

Fourthly, by for example selecting the upward and downward, leftward and rightward and oblique directions with respect to a reference position as the basic paths for the moving paths of the movable element, it is possible to make easy the storage and discrimination of the moving paths.

furthermore, by combining two or more moving paths to form another moving path, it is possible to increase the number of moving paths so as to enter a greater variety of characters, symbols, etc. Also, by selecting the angle formed by each branched path to the substantially 0°, 90° or 180°, it is possible to ensure easy and smooth selection of the moving paths.

Also, by making each of simple closed loops correspond to a character, symbol or the like, it is possible to continously enter the characters, symbols, etc.

Furthermore, by arranging movable element detecting means at each detection position, it is possible to detect the moving path of the movable element in accordance with the detection output or outputs of the movable element detecting means.

Moreover, there is incorporated the character/symbol input means which detects the moving path of the movable element in accordance with the combination of detection outputs from the movable element detecting means thereby inputting the corresponding character, symbol or the like.

Alternatively, by using a conductor for the portions of the movable element detecting means to which the movable element approaches, it is possible to detect the movable element by sensing the approaching or contacting of the movable element with the conductor.

### BRIEF DESCRIPTION OF THE DRAWINGS

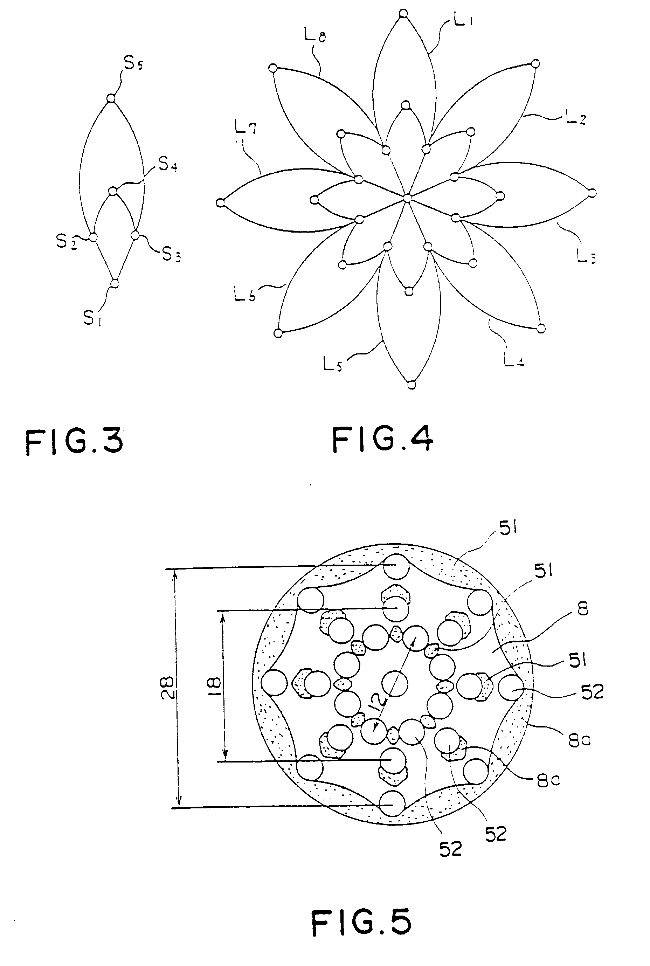

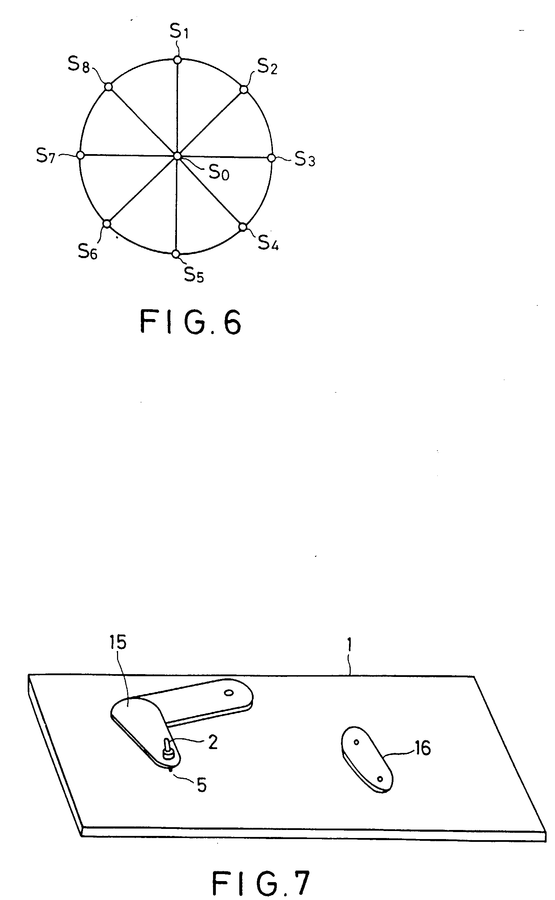

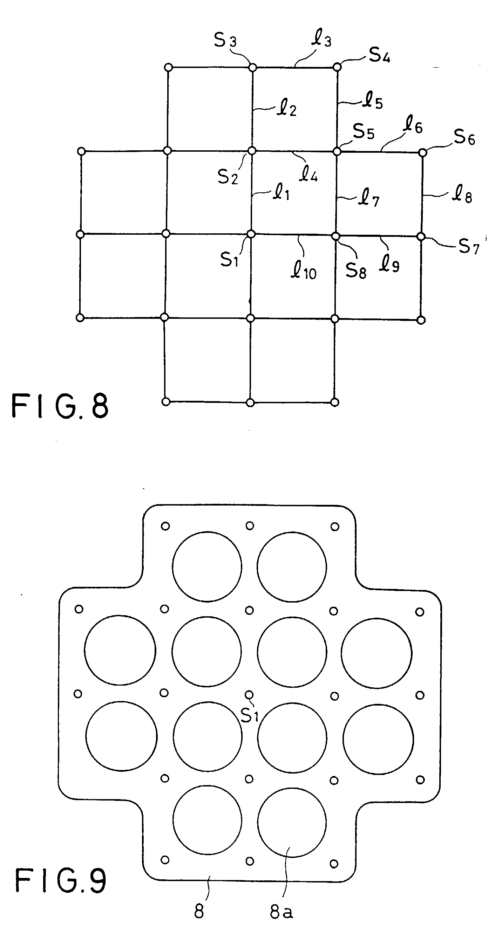

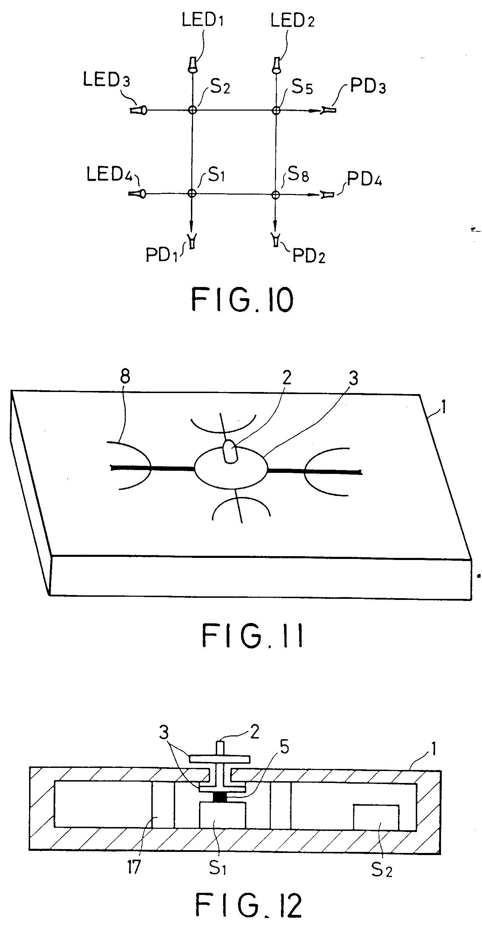

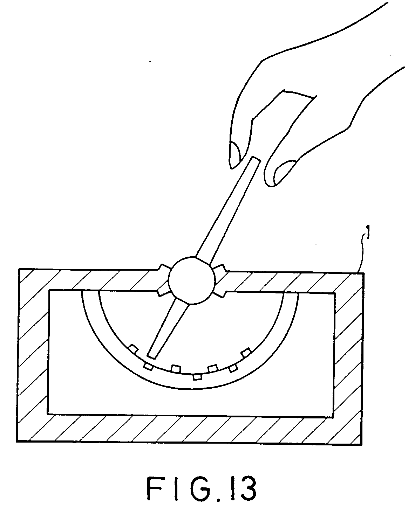

Fig. 1 is a sectional view of an information input apparatus according to an embodiment of the present invention, Fig. 2 is a perspective view of the information input apparatus shown in Fig. 1, Fig. 3 is a schematic diagram for explaining the arrangement of the sensors in the information input apparatus shown in Fig. 1, Fig. 4 is a diagram showing the arrangement of the sensors in an information input apparatus capable of entering a large number of characters, symbols, etc., Fig. 5 is a plan view of the grooves corresponding to the sensor arrangement diagram shown in Fig. 4, Fig. 6 is a diagram showing the arrangement of sensors in a case where two reference positions are provided, Fig. 7, 11 and 12 illustrate perspective views of information input apparatus according to another embodiment of the present invention, Fig. 8 is a diagram showing the arrangement of the sensors in an information input apparatus according to another embodiment of the invention, Fig. 9 is a plan view of the grooves corresponding to the sensor arrangement diagram shown in Fig. 8, Fig. 10 is a diagram showing the arrangement of the sensors in an information input apparatus according to another embodiment of the present invention, Fig. 12 is a sectional view of the information input apparatus shown in Fig. 11, Fig. 13 is a sectional view of an information input apparatus according to another embodiment of the present invention.

### DETAILED DESCRIPTION OF THE PREFERRED EMBODIMENTS

An embodiment of the present invention will now be described in detail with reference to the accompanying drawings.

Fig. 1 is a sectional view of an information input apparatus according to an embodiment of the present invention. In Fig. 1, numeral 1 designates a housing of the information input apparatus according to the present embodiment, 2 an operating rod which is operated for entering a character, symbol or the like, 3 a plane guide composed of a transparent member, 4 a directional guide for preventing reversing of the direction of throwing of the operating rod 2, and 5 a movable element forward end made of a metal.

The operating rod 2, the plane guide 3, the directional guide 4 and the movable element forward end 5 form a movable element.

On the other hand, numeral 6 designates a window formed in the housing 1, 7 a receiving groove for receiving the operating rod 2, 8 a groove into which the movable element forward end 5 is slid, S₁, S₂ and S₃ sensors which are each disposed in the groove 8 and composed of a pair of electrodes juxtaposed at a given spacing thereby sensing the movable element forward end 5 when it is positioned on the electrodes, 10 a sensor integrated circuit, 11 a signal line, 12 a connector for external connection, and 13 the back cover of the housing 1.

With this information input apparatus, as shown in Fig. 2, the operating rod 2 extended through the window 6 of the housing 1 is held like a pen and it is moved within the window 6. When the operating rod 2 is moved, the movable element forward end 5 is moved within the groove 8 along it.

In response to the movement of the operating rod 2, the plane guide 3 and the directional guide 4 are moved horizontally. As a result of the movement of the plane guide 3 and the directional guide 4, the movable element is moved on a single plane and there is no danger of the movable element from coming off the housing 1.

When the movable element forward end 5 successively arrives on the sensors S₁ to S₃, the electrodes of the sensors S₁ to S₃ are energized and this is detected by the sensor integrated circuit 10.

Fig. 3 is a diagram showing the paths of movement of the movable element shown in Fig. 1. The five sensors S₁ to S₅ are arranged in the paths of movement of the movable element, i.e., the paths of movement of the movable element which are formed by the groove 8 shown in Fig. 1.

Of these sensors S₁ to S₅, the sensor S₁ arranged at a reference position is designated as a reference sensor.

As a result, the paths of movement of the movable element forward end 5 are respectively specified by the line segments S₁-S₂, S₁-S₃, S₂-S₄, S₂-S₅, S₃-S₄ and S₃-S₅.

For instance, when the movable element forward end 5 is moved from the sensor S₁ to return to the sensor S₁ through the sensors S₂, S₄ and S₃, this is detected by the successive detection of the movable element forward end 5 by the sensors S₁, S₂, S₄, S₃ and S₁.

The sensor integrated circuit 10 of Fig. 1 preliminarily stores the following distinct paths of movement and the characters, symbols, etc., corresponding respectively to the paths of movement.

When the movable element forward end 5 makes a movement starting at the reference sensor S₁ and returning to the sensor S₁ through any of the other sensors S₂ to S₄, if this path of movement is any one of the 9 distinct paths of movement of the movable element, the sensor integrated circuit 10 outputs the symbol or the like corresponding to the path of movement in question.
(1) Sensors S₁ - S₂ - S₁
   (Going and returning from the sensor S₂)
(2) Sensors S₁ - S₂ - S₄ - S₃ - S₁
   (Passing through the sensor S₄ clockwise)
(3) Sensors (S₁ - S₂ - S₄ - S₂ - S₁
   (Going and returning from the sensor S₄ through the sensor S₂)
(4) Sensors S₁ - S₃ - S₄ - S₂ - S₁
   (Passing through the sensor S₄ counterclockwise)
(5) Sensors S₁ - S₃ - S₄ - S₃ - S₁
   (Going and returning from the sensor S₄ via the sensor S₃ )
(6) Sensors S₁ - S₂ - S₅ - S₃ - S₁
   (Passing through the sensor S₅ clockwise)
(7) Sensors S₁ - S₂ - S₅ - S₂ -S₁
   (Going and returning from the sensor S₅ through the sensor S₂)
(8) Sensors S₁ - S₃ - S₅ - S₂ - S₁
   (Going and returning from the sensor S₅ through the sensor S₃)
(9) Sensors S₁ - S₃ - S₅ - S₃ - S₁
   (Going and returning from the sensor S5 through the sensor S₃)

Next, the entering of information by the information input apparatus shown in Fig. 1 will be described. Here, it is assumed that the movable element forward end 5 is present on the reference sensor S₁.

When the operating lever 2 is started from the reference sensor S₁ to move along the desired path of movement and return onto the reference sensor S₁, the reference sensor S₁ - and any of other sensors S₂ to S₅ along the path of movement are successively energized.

The sensor integrated circuit 10 stores the orders in which the sensors S₁ to S₅ are selectively turned on so that when the reference sensor S₁ is finally turned on, the sensor integrated circuit 10 detects the path of movement of the movable element corresponding to the order in which the sensors S₁ to S₅ are turned on selectively.

In addition, the sensor integrated circuit 10 outputs the character, symbol or the like corresponding to the path of movement.

Then, in accordance with the above-mentioned 9 distinct paths of movement, only the 9 different characters, symbols, etc., can be entered.

For this reason, as shown in Fig. 4, 8 path groups L₁ to S₈ are arranged in the upward and downward, leftward and rightward and oblique directions in a petal form so that a greater number of paths of movement are preset and a greater number of characters, symbols, etc., can be entered.

By forming the paths of the movable element in the upward and downward, leftward and rightward and oblique directions with the reference position as a center, the paths of movement can be stored and distinguished easily.

The number of sensors required for the formation of the paths of movement is 25 including a reference sensor S₁ which is shared by all the path groups L₁ to L₈ and 2 sensors shared by each of the adjacent path groups L₁ and L₂, L₂ and L₃, ..., L₇ and L₈, and L₈ and L₁.

It is to be noted that there is the possibility of some increase or decrease in the number of the sensors depending on the logic used by the sensor integrated circuit 10.

Since each of the path groups is composed of 9 paths of movement each corresponding to one character, symbol or the like, the whole path groups L₁ to L₈ form 72 distinct paths of movement thereby permitting the entry of 72 different characters, symbols, etc.

Tables 1 and 2 show examples each showing the corresponding relation between the 72 distinct paths of movement and the corresponding 72 different characters, symbols, etc.

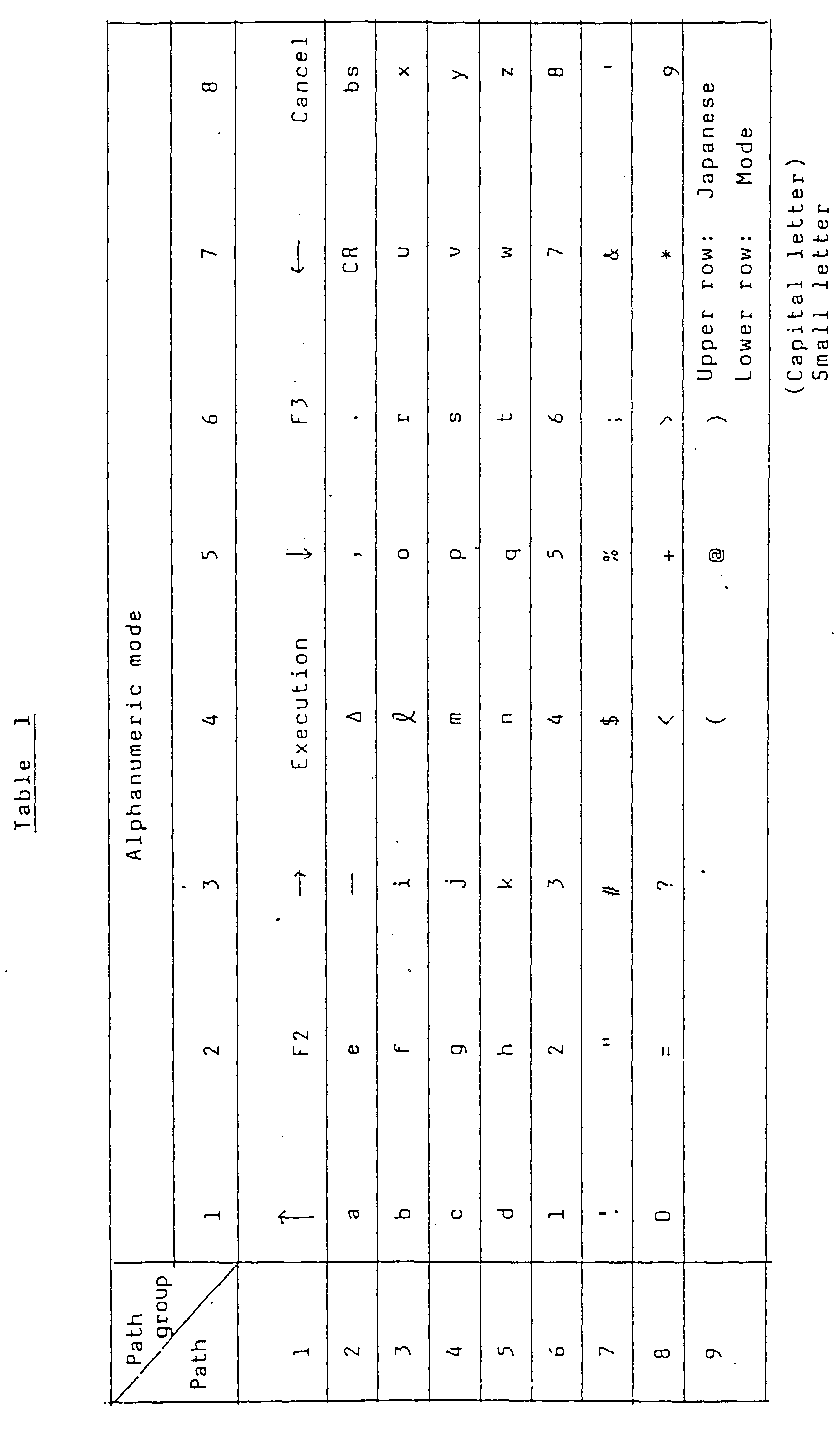

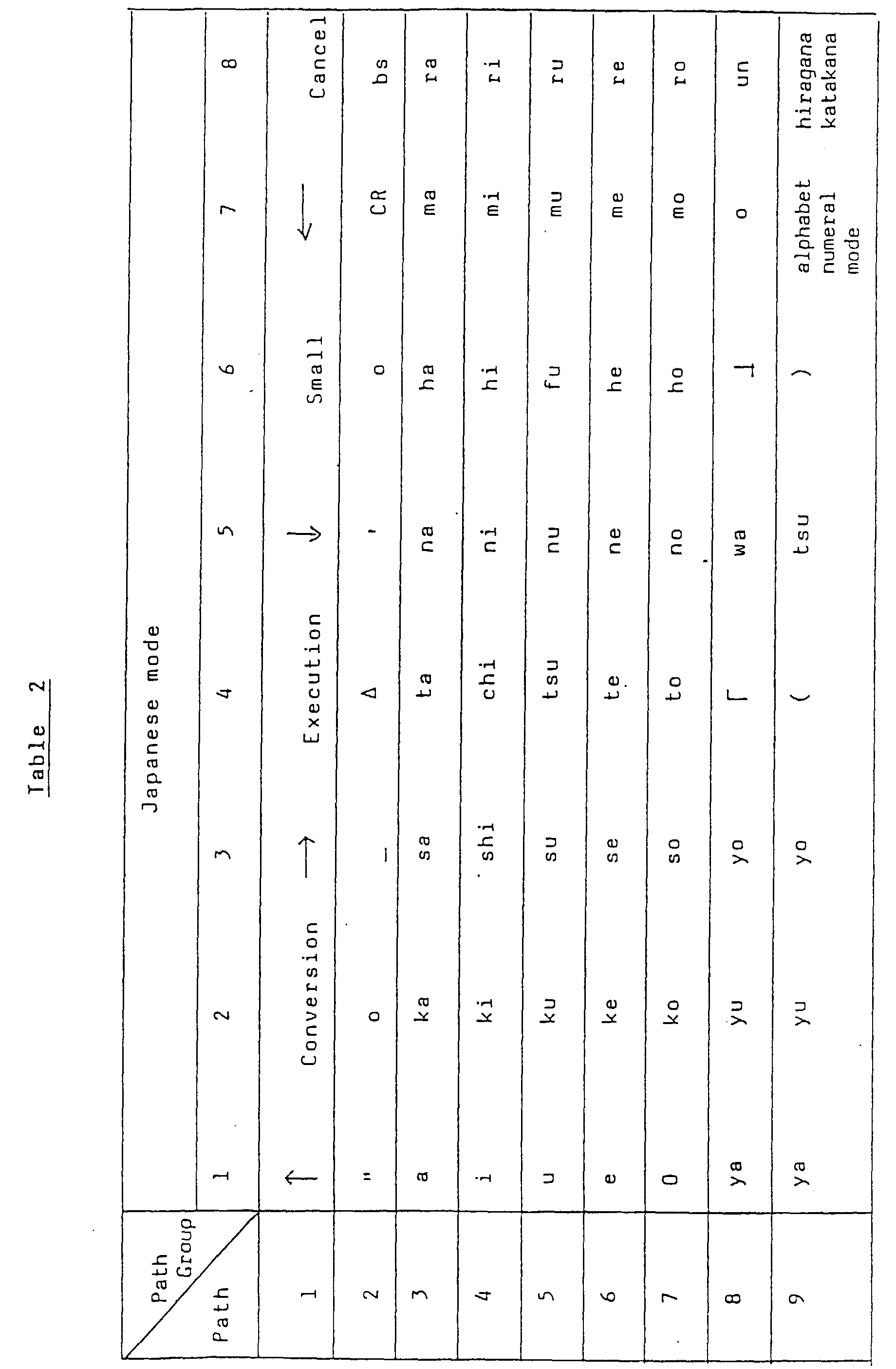

Since the characters, symbols, etc., can be arranged regularly, they can be stored easily. Also, by labelling or printing each character at a position near the corresponding path on the surface of the housing 1, it is possible to make easy the entry of the characters, symbols, etc.

With the paths of movement shown in Fig. 4, as shown in Fig. 5 the paths of movement of the movable element are defined by guide members 8a so as to make easy the selection and discrimination of the paths of movement.

In Fig. 5, portions having many spots indicate guide members 51, and designated by "0" are the positions of sensors 52. With the guide members 51, in order that the movable element forward end 5 may be moved smoothly over the sensor portions, the movable element forward end 5 or each of the guide members 51 may be shaped into a special form by making it round or rounding its corners.

Also, when moving the movable element as well as when the movable element is moved to go to and return from the position of any given sensor, the feeling of the contact between the movable element and the guide members 8a is transmitted to the hand and therefore the movable element can be moved rapidly and accurately.

In addition, by forming a depression 14 at the central reference position, it serves as a guide when moving the movable element.

While, in the present embodiment, each pair of electrodes are energized to detect the movable element forward end 5, it is possible to use sensors each adapted to establish a capacitive coupling when the movable element forward end 5 approaches.

It is to be noted that while, in the present embodiment, the position at which the sensor S₁ is arranged is designated as the reference position for purposes of simplification, it is not always necessary to designate a single position as a reference position and two or three or more reference positions may be provided. Also the reference position may be eliminated.

Fig. 6 is a diagram showing the paths of movement of an information input apparatus in which an A group includes a sensor Sₒ and a B group includes eight sensors S₁ to S₈ on the circumference centering on the sensor Sₒ.

In this information input apparatus, the paths of movement of the movable element are formed by the segments connecting the sensor Sₒ of the A group with each of the sensors S₁ to S₈ of the B group and corresponding to the radius of the circumference.

On the other hand, with the paths of movement of the information input apparatus shown in Fig. 3, the 9 distinct paths of movement can be easily discriminated without the sensor S₁.

For instance, as regards the path of movement in the form of the segment S₂-S₄-S₃-S₄-S₃ connecting the sensors S₂ to S₄, it is very easy to form logical circuits which interpret it as the paths of movement of 2 sensors S₂-S₄-S₃ and 5 S₃-S₄-S₃ which respectively correspond to the above mentioned paths of movement of 2 sensors S₁-S₂-S₄-S₃-S₁ and 5 sensors S₁-S₃-S₄-S₃-S₁. (When the detection signals of the sensors S₂ and S₃ are generated successively, it can be considered that the sensor S₁ - is omitted between the two sensors.)

As described hereinabove, with the information input apparatus in accordance with the present invention, any specific position such as a reference position does not constitute any essential requirement and it is sufficient if certain logical relations are predetermined with respect to the paths of movement such that it is possible to discriminate the completion of the path of movement corresponding to one character, symbol or the like.

Also, each detection position for detecting the movable element need not always be established at the end point of the path of movement. It is sufficient to select a position which must be passed through by the movable element when moving along the path of movement. In this case, it is needless to say that the detection position is not limited to one position and the only requirement is that when the movable element is moved along a certain path of movement, the path is distinguished from the other paths of movement by all of the resulting detection signals of the detection positions.

Referring now to Fig. 7, there is illustrated a perspective view of an information input apparatus according to another embodiment of the present invention. In the Figure, numeral 15 designates a link motion for moving a movable element forward end 5 on a plane, and 16 a rest for standardizing the position of the hand. Note that in Fig. 7 the portions which perform the same functions as in Fig. 1 are designated by the same reference numerals and their explanation is omitted.

Next, Fig. 8 is a diagram showing the principal part or the path of movement of an information input apparatus accorrding to still another embodiment of the present invention.

The paths of movement of the movable Element are formed by the respective segments ℓ₁, ℓ₂, ..., ℓ₁₀ connecting the sensors S₁ to S₈ with one another. In this case, ,the position where the reference sensor S₁ is arranged is designated as a reference position.

The paths of movement of the movable element include for example the following:
(1) Paths ℓ₁ - ℓ₂ - ℓ₁
(2) Paths ℓ₁ - ℓ₂ - ℓ₃ - ℓ₂- ℓ₁,
(3) Paths ℓ₁ -ℓ₂ - ℓ₃ - ℓ₅ - ℓ₇ - ℓ₁₀
(4) Paths ℓ₁ - ℓ₄ - ℓ₇ - ℓ₁₀
(5) Paths ℓ₁ - ℓ₄ - ℓ₆ - ℓ₈ - ℓ₉ - ℓ₁₀

Therefore, the total number of the distinct paths of movement is 20.

By causing each of the paths of movement to correspond to a character, symbol or the like, 20 different characters, symbols, etc., can be entered.

With the paths of movement shown in Fig. 8, the paths of movement of the movable element are defined by the guide members 8a as shown in Fig 9 so as to make easy the selection and discrimination of the paths of movement.

It is to be noted that the paths of movement shown in Fig. 8 do not necessarily require that the sensors S₁ to S₈ are arranged at the respective detection positions. It is possible to arrange so that as shown in Fig. 10, light emitting devices LED₁, LED₂, LED₃, LED₄, ... for producing laser light and photosensitive devices PD₁, PD₂, PD₃, PD₄, ... for laser light receiving purposes are arranged in rows and columns and the intersections of the laser beams respectively connecting the light emitting devices LED₁ to LED₄ with the photosensitive devices PD₁ to PD₄ serve as the detection positions of the movable element.

By so doing, only when the movable element forward end 5 is positioned at any of the intersections of the laser beams, e.g., the sensors S₁, S₂, S₃, ..., the specified two laser paths of the group of light emitting and receiving device which are arranged in rows and columns are interrupted. Thus, the position can be discriminated as the intersection of the two laser paths. As a result, there is no need to arrange any detecting means at each of the detection positions.

It is to be noted that the embodiment is not limited to cases where the groups of light emitting and receiving devices are arranged in rows and columns. The laser beams need not cross each other at right angles and cases are possible where the laser beams cross each other obliquely.

Also, each of the detection positions may be the intersection of the plurality of laser paths.

Referring now to Fig. 11, there is illustrated a perspective view of an information input apparatus according to still another embodiment of the present invention.

In the present embodiment, each of grooves 8 is formed into a tree-like shape and each of the paths of movement represents the movement of a movable element forward end 5 which selects one of the branches.

As shown by the sectional view of Fig. 12, this information input apparatus is constructed in such a manner that the groove 8 is interposed between first and second plane guide members 3 which are arranged one upon another.

Supports 17 are arranged at positions which do not impede the movement of the movable element along the groove 8.

The movable element forward end 5 is composed of a magnet and sensors S are magnetic sensors.

It is to be noted that the movable element 5 may be composed of a light source, e.g., a light emitting diode or a reflector and the sensors S may comprise light sensors.

Referring now to Fig. 13, there is illustrated a perspective view of an information input apparatus according to still another embodiment of the present invention. In this embodiment, the ball-movable portion of a movable element is supported. As a result, a movable element forward end 5 is moved on a spherical surface. Thus, the movable element forward end 5 need not always be moved on a plane surface as shown in Fig. 1 and 11, respectively.

## Claims

1. An information input method comprising the steps of:
moving a movable element (2, 3, 5) on a plane surface or a curved surface;
characterized by determining a path of movement of said movable element (2, 3, 5) relative to said surface by detecting its passage past a plurality of fixed detection positions (S1, S2, S3) provided on said surface, whereby said path of movement of said movable element (2, 3, 5) defines an activation sequence of detected positions;
the character, symbol or processing instruction to be input being determined without recourse to a discrete "enter" command, by:
(a) correlating the detected activation sequence against a plurality of predetermined sequences of detection positions, each of which predetermined sequences corresponds to a particular character, symbol or processing instruction, hereinafter called symbol;
(b) assigning to said detected activation sequence the respective symbol having the same value as the symbol assigned to the corresponding predetermined sequence, and
(c) inputting the symbol corresponding to said activation sequence.

2. An information input method according to claim 1 further characterised in that, in said step of moving the movable element, the movable element is movable along but not detachable from said surface.

3. An information input method according to claim 1 or claim 2 further characterised in that, in said step of determining the path of movement of said movable element:
(a) said plurality of fixed detection positions (S1, S2, S3) is preliminarily classified into a plurality of groups, and
(b) the start and the completion points of an activation sequence corresponding to an individual symbol to be input are determined by the passage of said movable element from the detection positions classified in one of said groups to the detection positions in another of said groups, or by the passage of said movable element between the detection positions in a number of said groups according to a predetermined sequence.

4. An information input method according to Claim 3, further characterized in that in said step of determining the passage of said movable element, the completion of said activation sequence corresponding to an individual symbol to be input is indicated when such judgement is made as a detected detecting position belongs to a particular reference group of detection positions among groups of detection positions according to said preliminary classification.

5. An information input method according to Claim 4, further characterized in that in said step of determining the passage of said movable element, when two detection positions classified in the same reference group in which a plurality of detection positions is classified are successively detected, the completion of said activation sequence corresponding to an individual symbol to be input is indicated by the first detected one of said detection positions, and the start of the following activation sequence is indicated by the last detected one of said two detection positions.

6. An information input method according to Claim 4, further characterized in that in said step of determining the passage of said movable element, the completion of said activation sequence corresponding to an individual symbol to be input is indicated by detecting a detection position in a different group from the group in which the preceding detecting position is classified.

7. An information input method according to Claim 6, further characterized in that in said step of detecting the passage of said movable element, when two detection positions classified in the same group in which a plurality of detection positions is classified are successively detected, the start of the following activation sequence is indicated by the last detected one of said two detection positions.

8. An information input apparatus comprising:
a movable element (2, 3, 5) adapted to be movable on a plane surface or a curved surface, said movable element (2,3,5) comprising an operating handle (2);
movable element detecting means (S1, S2, S3) arranged at a plurality of predetermined positions on said surface for detecting the passage of said movable element;
characterized by character/symbol/instruction discriminating means for determining a character, symbol or instruction corresponding to a passage of said movable element in relation to an activation sequence of said detecting means;
character/symbol/instruction input means for inputting selected character/symbol/instruction signals from said character/symbol/instruction discriminating means;
said movable element (2, 3, 5) comprising a first plane guide member (3) having said operating handle (2) attached to an upper surface thereof and being movable on said surface, and a detection member (5) attached to a lower surface of said plane guide member (3) and adapted to be detected by said movable element detecting means;
said character/symbol/instruction discriminating means comprising:
(a) means for correlating the detected activation sequence against a plurality of predetermined sequences of detection positions, each of which predetermined sequences corresponds to a particular character, symbol or processing instruction, hereinafter called symbol;
(b) means for assigning to said detected activation sequence the respective symbol having the same value as the symbol assigned to the corresponding predetermined sequence, and
(c) means for inputting the symbol corresponding to said activation sequence.

9. An information input apparatus according to Claim 8 wherein the movable element (2, 3, 5) is movable along but not detachable from said surface.

10. An information input apparatus according to Claim 8 or Claim 9 further characterized in that:
(a) said plurality of fixed detection positions (S1, S2, S3) is preliminarily classified into a plurality of groups, and
(b) the start and the completion points of an activation sequence corresponding to an individual symbol to be input are determined by the passage of said movable element from the detection positions classified in one of said groups to the detection positions in another of said groups, or by the passage of said movable element between the detection positions in a number of said groups according to a predetermined sequence.

11. An information input apparatus as claimed in any one of Claims 8 to 10, further characterized in that said movable element comprises a second plane guide member (3) attached to said operating handle (2) for regulating the movement of said operating handle (2) in relation to said movable element detecting means (S1, S2, S3) such that said detection member (5) is maintained in a non-contacting relation with respect to said movable element detecting means (S1, S2, S3).

## Patentansprüche

1. Informationseingabeverfahren mit den Verfahrensschritten:
Bewegen eines bewegbaren Elementes (2,3,5) auf einer ebenen Oberfläche oder auf einer gekrümmten Oberfläche;
gekennzeichnet durch
Feststellen eines Bewegungsweges des bewegbaren Elementes (2,3,5) bezüglich dieser Oberfläche durch Erfassen seines Durchgangs nach einer Vielzahl von festen Erfassungspositionen (S1,S2,S3), die auf dieser Oberfläche vorgesehen sind, wodurch dieser Bewegegungsweg des bewegbaren Elementes (2,3,5) eine Aktivierungssequenz der erfaßten Positionen festlegt;
wobei der einzugebende Buchstabe, das einzugebende Symbol oder die einzugebende Verarbeitungsinstruktion ohne Rückgriff auf einen bestimmten "Eingabe"-Befehl festgestellt wird, durch:
(a) Korrelieren der erfaßten Aktivierungssequenz gegenüber einer Vielzahl von vorbestimmten Sequenzen von Erfassungspositionen, wobei jede der vorbestimmten Sequenzen einem bestimmten Buchstaben, einem bestimmten Symbol oder einer bestimmten Verarbeitungsinstruktion entspricht, was im folgenden als Symbol bezeichnet wird;
(b) Zuordnen dieser erfaßten Aktivierungssequenz des entsprechenden Symbols, welches den gleichen Wert aufweist wie das der entsprechenden vorbestimmten Sequenz zugeordnete Symbol, und
(c) Eingeben des Symbols, das dieser Aktivierungssequenz entspricht.

2. Informationseingabeverfahren nach Anspruch 1, desweiteren dadurch gekennzeichnet, daß bei dem Schritt des Bewegens des bewegbaren Elementes das bewegbare Element entlang, aber nicht lösbar von dieser Oberfläche bewegbar ist.

3. Informationseingabeverfahren nach Anspruch 1 oder nach Anspruch 2, desweiteren dadurch gekennzeichnet, daß während des Schrittes des Feststellens des Bewegungsweges dieses bewegbaren Elementes:
(a) diese Vielzahl von festen Erfassungspositionen (S1,S2,S3) vorläufig in eine Vielzahl von Gruppen klassifiziert wird, und
(b) die Start- und die Endpunkte der Aktivierungssequenz, die einem indivduellen Symbol entspricht und einzugeben ist, festgestellt wird durch den Durchlauf des bewegbaren Elementes beginnend von den Erfassungspositionen, die in eine dieser Gruppen klassifiziert worden sind, bis zu den Erfassungspositonen in einer anderen dieser Gruppen, oder durch den Durchlauf des bewegbaren Elementes zwischen den Erfassungspositionen in einer Anzahl dieser Gruppen gemäß einer vorbestimmten Sequenz.

4. Informationseingabeverfahren nach Anspruch 3, desweiteren dadurch gekennzeichnet, daß bei dem Schritt des Feststellens des Durchlaufes dieses bewegbaren Elementes die Vollendung dieser Aktivierungssequenz, die einem einzugebenden individuellen Symbol entspricht, angezeigt wird, wenn eine derartige Entscheidung getroffen wird, daß eine erfaßte Erfassungsposition zu einer bestimmten Referenzgruppe von Erfassungspositionen unter den Gruppen von Erfassungspositionen gemäß dieser vorbestimmten Klassifikation zugehörig ist.

5. Informationseingabeverfahren nach Anspruch 4, desweiteren dadurch gekennzeichnet, daß während des Schrittes des Feststellens des Durchlaufes dieses bewegbaren Elementes, wenn zwei Erfassungspositionen, die in der gleichen Referenzgruppe klassifiziert worden sind, in welcher eine Vielzahl von Erfassungspositionen klassifiziert ist, nacheinander erfaßt werden, die Vollendung dieser Aktivierungssequenz, die einem einzugebenden individuellen Symbol entspricht, von der ersten erfaßten dieser Erfassungspositionen angezeigt wird, und wobei der Beginn der folgenden Aktivierungssequenz von der zuletzt erfaßten von diesen zwei Erfassungpositionen angezeigt wird.

6. Informationseingabeverfahren nach Anspruch 4, desweiteren dadurch gekennzeichnet, daß während des Schrittes des Feststellens des Durchlaufes dieses bewegbaren Elementes die Vollendung von dieser Aktivierungssequenz, die einem einzugebenden individuellen Symbol entspricht, angezeigt wird durch Erfassen einer Erfassungsposition in einer zu der Gruppe unterschiedlichen Gruppe, in welcher die vorangegangene Erfassungsposition klassifiziert worden ist.

7. Informationseingabeverfahren nach Anspruch 6, desweiteren dadurch gekennzeichnet, daß während des Schrittes des Feststellens des Durchlaufes dieses bewegbaren Elementes, wenn zwei Erfassungspositionen, die in der gleichen Gruppe klassifiziert worden sind, in welcher eine Vielzahl von Erfassungspositionen klassifiziert ist, nacheinander erfaßt werden, der Beginn der folgenden Aktivierungssequenz von der zuletzt erfaßten dieser zwei Erfassungpositionen angezeigt wird.

8. Informationseingabevorrichtung mit:
einem bewegbaren Element (2,3,5), das dazu ausgelegt ist, auf einer ebenen Oberfläche oder auf einer gekrümmten Oberfläche bewegbar zu sein, wobei dieses bewegbare Element (2,3,5) einen Betätigungshandgriff (2) enthält;
Erfassungseinrichtungen (S1,S2,S3) für das bewegbare Element, die an einer Vielzahl von vorbestimmten Positionen auf dieser Oberfläche zur Erfassung des Durchlaufes dieses bewegbaren Elementes angeordnet sind;
gekennzeichnet durch
Buchstaben-/Symbol-/Instruktions-Diskriminierungseinrichtungen zur Feststellung eines Buchstabens, eines Symbols oder einer Instruktion, die einem Durchlauf dieses bewegbaren Elementes in Relation zu einer Aktivierungssequenz dieser Feststellungseinrichtungen entspricht;
Buchstaben-/Symbol-/Instruktions-Eingabeeinrichtungen zur Eingabe ausgewählter Buchstaben-/Symbol-/Instruktions-Signale von diesen Buchstaben-/Symbol-/Instruktions-Diskriminierungseinrichtungen;
wobei dieses bewegbare Element (2,3,5) umfaßt ein erstes ebenes Führungselement (3) mit diesem Betätigungshandgriff (2), der an einer oberen Oberfläche davon angeschlossen ist und auf dieser Oberfläche bewegbar ist, sowie ein Erfassungselement (5), das an einer unteren Oberfläche dieses ebenen Führungselementes (3) angeschlossen ist und dazu ausgelegt ist, von diesen Erfassungseinrichtungen für das bewegbare Element erfaßt zu werden;
wobei diese Buchstaben-/Symbol-/Instruktions-Diskhminierungseinhchtungen umfassen:
(a) Einrichtungen zum Korrelieren der erfaßten Aktivierungssequenz gegenüber einer Vielzahl von vorbestimmten Sequenzen von Erfassungspositionen, wobei jede der vorbestimmten Sequenzen einem bestimmten Buchstaben, einem bestimmten Symbol oder einer bestimmten Verarbeitungsinstruktion entspricht, die im folgenden als Symbol bezeichnet werden;
(b) Einrichtungen, um zu dieser erfaßten Aktivierungssequenz das entsprechende Symbol zuzuordnen, das den gleichen Wert wie das Symbol aufweist, das der entsprechenden vorbestimmten Sequenz zugeordnet ist, und
(c) Einrichtungen zum Eingeben des Symbols, das dieser Aktivierungssequenz entspricht.

9. Informationseingabevorrichtung nach Anspruch 8, worin das bewegbare Element (2,3,5) entlang, aber nicht von dieser Oberfläche lösbar, bewegbar ist.

10. Informationseingabevorrichtung nach Anspruch 8 oder nach Anspruch 9, desweiteren dadurch gekennzeichnet,daß:
(a) diese Vielzahl von festen Erfassungspositionen (S1,S2,S3) vorläufig in eine Vielzahl von Gruppen klassifizierbar ist, und
(b) die Start- und die Endpunkte einer Aktivierungssequenz, die einem einzugebenden individuellen Symbol entspricht, feststellbar ist durch den Durchlauf dieses bewegbaren Elementes beginnend von den Erfassungspositionen, die in eine dieser Gruppen klassifizierbar ist, bis zu den Erfassungspositionen in einer anderen dieser Gruppen, oder durch den Durchlauf des bewegbaren Elementes zwischen den Erfassungspositionen in einer Anzahl von diesen Gruppen gemäß einer vorbestimmten Sequenz.

11. Informationseingabevorrichtung nach irgendeinem der Ansprüche 8 bis 10, desweiteren dadurch gekennzeichnet, daß das bewegbare Element umfaßt ein zweites ebenes Führungselement (3), das an diesem Betätigungshandgriff (2) zur Regulierung der Bewegung des Betätigungshandgriffes (2) in Relation zu diesen Erfassungseinrichtungen (S1,S2,S3) für das bewegbare Element derart angeschlossen ist, daß das Erfassungselement (5) in einem nichtberührenden Verhältnis bezüglich der Erfassungseinrichtung (S1,S2,S3) für das bewegabare Element haltbar ist.

## Revendications

1. Procédé d'entrée d'informations comprenant les étapes consistant à:
déplacer un élément mobile (2, 3, 5) sur une surface plane ou une surface courbe;
caractérisé par la détermination d'un chemin de mouvement dudit élément mobile (2, 3, 5) par rapport à ladite surface, par détection de son passage par une pluralité de positions de détection fixes (S1, S2, S3) prévues sur ladite surface, de façon que ledit chemin de mouvement dudit élément mobile (2, 3, 5) définisse une séquence d'activation des positions détectées;
le caractère, symbole ou instruction de traitement destiné à être entré, étant déterminé sans avoir recours à une commande discrète "entrée", par :
(a) corrélation de la séquence d'activation détectée avec une pluralité de séquences prédéterminées de positions de détection, chacune desquelles séquences prédéterminées correspondant à un caractère, symbole ou instruction de traitement particulier, appelé ci-après, symbole;
(b) affectation à ladite séquence d'activation détectée du symbole respectif ayant la même valeur que le symbole affecté à la séquence correspondante prédéterminée, et
(c) entrée du symbole correspondant à ladite séquence d'activation.

2. Procédé d'entrée d'informations selon la revendication 1, caractérisé en outre en ce que, dans ladite étape de déplacement de l'élément mobile, l'élément mobile peut être déplacé le long de, mais non-séparable de, ladite surface.

3. Procédé d'entrée d'informations selon la revendication 1 ou la revendication 2, caractérisé en outre en ce que, dans ladite étape de détermination du chemin de mouvement dudit élément mobile :
(a) ladite pluralité de positions de détection fixes (S1, 52, S3) est classée de façon préliminaire en une pluralité de groupes, et
(b) les points de départ et d'arrivée d'une séquence d'activation correspondant à un symbole individuel destiné à être entré sont déterminés par le passage dudit élément mobile depuis les positions de détection classées dans l'un desdits groupes, vers les positions de détection dans un autre desdits groupes, ou par le passage dudit élément mobile entre les positions de détection dans un certain nombre desdits groupes, selon une séquence prédéterminée.

4. Procédé d'entrée d'informations selon la revendication 3, caractérisé en outre en ce que, dans ladite étape de détermination du passage dudit élément mobile, la fin de ladite séquence d'activation correspondant à un symbole individuel destiné à être entré, est indiquée lorsqu'une estimation est faite selon laquelle une position de détection détectée appartient à un groupe de référence particulier de positions de détection, parmi les groupes de positions de détection, conformément audit classement préliminaire.

5. Procédé d'entrée d'informations selon la revendication 4, caractérisé en outre en ce que, dans ladite étape de détermination du passage dudit élément mobile, lorsque deux positions de détection classées dans le même groupe de référence, dans lequel une pluralité de positions de détection sont classées, sont successivement détectées, la fin de ladite séquence d'activation correspondant à un symbole individuel destiné à être entré, est indiquée par la première position détectée parmi lesdites positions de détection, et le début de la séquence d'activation suivante est indiqué par la dernière position détectée parmi lesdites deux positions de détection.

6. Procédé d'entrée d'informations selon la revendication 4, caractérisé en outre en ce que, dans ladite étape de détermination du passage dudit élément mobile, la fin de ladite séquence d'activation correspondant à un symbole individuel destiné à être entré, est indiquée par la détection d'une position de détection située dans un groupe différent du groupe dans lequel la position de détection précédente est classée.

7. Procédé d'entrée d'informations selon la revendication 6, caractérisé en outre en ce que, dans ladite étape de détermination du passage dudit élément mobile, lorsque deux positions de détection classées dans le même groupe, dans lequel une pluralité de positions de détection sont classées, sont détectées successivement, le début de la séquence d'activation suivante est indiqué par la dernière position détectée parmi lesdites deux positions de détection.

8. Dispositif d'entrée d'informations comprenant:
un élément mobile (2, 3, 5), prévu pour être mobile sur une surface plane ou une surface courbe, ledit élément mobile (2, 3, 5) comprenant une poignée fonctionnelle (2);
des moyens de détection d'élément mobile (S1, S2, S3), agencés sur une pluralité de positions de détection prédéterminées sur ladite surface, pour détecter le passage dudit élément mobile;
caractérisé par des moyens de distinction de caractère/symbole/instruction, pour déterminer un caractère, symbole ou instruction, correspondant à un passage dudit élément mobile en relation avec une séquence d'activation desdits moyens de détection; des moyens d'entrée de caractère/symbole/instruction, pour entrer des signaux de caractère/symbole/instruction choisis depuis lesdits moyens de distinction de caractère/symbole/instruction;
ledit élément mobile (2, 3, 5) comprenant un premier organe de guidage plan (3), ayant ladite poignée fonctionnelle (2) fixée à une surface supérieure de celui-ci, et étant mobile sur ladite surface, et un organe de détection (5) fixé à une surface inférieure dudit organe de guidage plan (3), et prévu pour être détecté par lesdits moyens de détection d'élément mobile;
lesdits moyens de distinction de caractère/symbole/instruction comprenant:
(a) des moyens pour corréler la séquence d'activation détectée avec une pluralité de séquences prédéterminées de positions de détection, chacune desquelles séquences prédéterminées correspondant à un caractère, symbole ou instruction de traitement particulier, appelé ci-après symbole;
(b) des moyens pour affecter à ladite séquence d'activation détectée le symbole respectif ayant la même valeur que le symbole affecté à la séquence correspondante prédéterminée, et
(c) des moyens pour entrer le symbole correspondant à ladite séquence d'activation.

9. Dispositif d'entrée d'informations selon la revendication 8, dans lequel l'élément mobile (2, 3, 5) peut être déplacé le long de, mais non-séparable de, ladite surface.

10. Dispositif d'entrée d'informations selon la revendication 8 ou la revendication 9, caractérisé en outre en ce que :
(a) ladite pluralité de positions de détection fixes (S1, S2, S3) est classée de façon préliminaire en une pluralité de groupes, et
(b) les points de départ et d'arrivée d'une séquence d'activation correspondant à un symbole individuel destiné à être entré sont déterminés par le passage dudit élément mobile depuis les positions de détection classées dans l'un desdits groupes, vers les positions de détection dans un autre desdits groupes, ou par le passage dudit élément mobile entre les positions de détection dans un certain nombre desdits groupes, selon une séquence prédéterminée.

11. Dispositif d'entrée d'informations selon l'une quelconque des revendications 8 à 10, caractérisé en outre en ce que ledit élément mobile comprend un deuxième organe de guidage plan (3), fixé à ladite poignée fonctionnelle (2), pour réguler le mouvement de ladite poignée fonctionnelle (2) en relation avec lesdits moyens de détection d'élément mobile (S1, S2, S3), de façon que ledit organe de détection (5) soit maintenu dans une relation sans contact par rapport auxdits moyens de détection d'élément mobile (S1, S2, S3).
